(19) Europäisches Patentamt

European Patent Office

Office européen des brevets

(11) **EP 0 977 014 B1**

(12) **EUROPEAN PATENT SPECIFICATION**

(45) Date of publication and mention
of the grant of the patent:
**14.09.2005 Bulletin 2005/37**

(51) Int Cl.⁷: **G01C 21/20**, G01C 21/36

(21) Application number: **99306104.3**

(22) Date of filing: **30.07.1999**

(54) **Road image managing apparatus**

Strassenabbildungsverwaltungsvorrichtung

Dispositif pour gérer des images routières

(84) Designated Contracting States:
**DE FR GB**

(30) Priority: **31.07.1998 JP 21722498**

(43) Date of publication of application:
**02.02.2000 Bulletin 2000/05**

(73) Proprietor: **MATSUSHITA ELECTRIC INDUSTRIAL
CO., LTD.
Osaka 571-8501 (JP)**

(72) Inventors:
• **Miwa, Michio**
**Urayasu-shi, Chiba-ken 279-0012 (JP)**
• **Fukasawa, Muneaki**
**Yokohama-shi, Kanagawa-ken 223-0056 (JP)**
• **Yano, Koji**
**Yokohama-shi, Kanagawa-ken 234-0051 (JP)**

(74) Representative: **Senior, Alan Murray
J.A. KEMP & CO.,
14 South Square,
Gray's Inn
London WC1R 5JJ (GB)**

(56) References cited:
**EP-A- 0 539 144      FR-A- 2 755 228**

• **PATENT ABSTRACTS OF JAPAN vol. 012, no.
074 (P-674), 9 March 1988 (1988-03-09) & JP 62
212776 A (HITACHI LTD), 18 September 1987
(1987-09-18)**

EP 0 977 014 B1

## Description

This invention relates to a road shot image managing apparatus for providing images of shots along a road.

A road shot image managing apparatus for providing images of shots along a road is known. Japanese patent application provisional publication No. 62-212776 discloses map information display system for selectively displaying map information at a position or a background image at the same position.

The aim of the present invention is to provide a superior road shot image managing apparatus.

The present invention provides a road shot image managing apparatus in accordance with claim 1 or claim 7.

According to a preferred embodiment of the present invention there is provided a first road shot image managing apparatus including: different storing portions for storing different types of image data of series shots along a road, each storing portion having a table for storing position data and attitude data of each of the series shots of each of different types of the image data with correspondence therebetween; an input portion for inputting instruction position data and instruction attitude data; a first reading portion for reading the attitude data and position data of each of the series shots of each of different types of the image data respectively corresponding to the instruction position data; and a second reading portion responsive to the input portion and the first reading portion for reading one of the series shots of one of different types of the image data in accordance with the position data and the attitude data from the first reading portion, and instruction attitude data to output the one of the series shots of different types of the image data. In the first road shot image managing apparatus, the second reading portion may include each of the attitude data from the first reading portion with the instruction attitude data and determines the one of different types of image data of which the attitude data's value is nearest to a value of the instruction attitude data in accordance with the comparing result and further determines one of the series shots of one of different types of the image data in accordance with the position data from the first reading portion.

In the first road shot image managing apparatus, the attitude data may include altitude data and direction data.

The first road shot image managing apparatus may further include a display monitor for displaying the one of the series shots from the second reading portion.

In the first road shot image managing apparatus, the input portion may include: a latitude and longitude input portion responsive to a first operation for inputting latitude data and longitude data and outputting the latitude data and longitude data as the instruction position data; a position data generating portion including a map data storing portion for storing map data, a map displaying portion for reading and displaying the map data and indicating portion response to a second operation for indicating a position on the displayed map data and a position data calculating portion for calculating the instruction position data in accordance with the position and the map data; a position data outputting circuit for outputting the latitude data and longitude data from the latitude and longitude input portion in the presence of the first operation as the instruction position data and outputting instruction position data from the calculating portion in the presence of the second operation; and an altitude data inputting and outputting portion for inputting and outputting the instruction altitude data.

According to an embodiment of the present invention there is provided a second road shot image managing apparatus including a storing portion for storing image data of series shots along a road and position data, each series shot of the image data and each of the position data being correspondingly stored; a reading portion responsive to a reading command for reading one of the series shots of the image data and the position data corresponding thereto from the first storing portion; a display for displaying the one of the series shots of the image data from the reading portion; a data generation portion for generating type data in response to an operation; a second storing portion for storing image data; and a writing portion for correspondingly writing the one of series shots of the image data and the position data from the reading portion in the second storing portion and further correspondingly writing the one of series shots of the image data and the position data from the reading portion in the second storing portion with the type data from data generation portion in the presence of the operation.

According to an embodiment of the present invention there is provided a third road shot image managing apparatus including storing portion for storing image data of series shots along a road and position data, each series shot of the image data and each of the position data being correspondingly stored; a reading portion for successively reading each of the series shots of the image data and the position data corresponding thereto from the first storing portion; a second storing portion for storing the image data; a thinning portion responsive to the reading portion for successively thinning the series shots of the image data at a predetermined interval of a value of the position data and successively writing thinned series shots of the image data in the second storing portion; a characteristic image detection portion for successively detecting a characteristic value of each of the series shots of the image data from the reading portion; a judging portion for judging whether each of the series shots of the image data is to be written in accordance with the characteristic value; and a writing portion for further writing the one of the series shots of the image data judged to be written in the second storing portion, wherein the second storing portion stores the thinned series shots of the image data and one of the series shots of the image data to be written

The third road shot image managing apparatus may further include an area inputting portion for inputting data indicating an area of a screen of the image data, wherein the writing portion writes one of series shots of the image data judged to be written in the second storing portion when the judging portion judges that each of the series shots of the image data is to be written in accordance with the characteristic value at the area.

In the third road shot image managing apparatus, the image data may include color data and the characteristic image detection portion includes: a color comparing portion for comparing color data of each pixel of the one of the series shots of the image data with color reference data; a counting portion for counting the pixels in the one of the series shots when the color data of each pixel of the one of the series shots of the image data exceed the color reference data, the characteristic image detection portion writing the one of the series shots in the second storing portion in accordance with a count of the counting portion.

According to an embodiment of the present invention there is provided a fourth road shot image managing apparatus including: a first storing portion for storing image data of series shots along a road and position data, each series shot of the image data and each of the position data being correspondingly stored; a reading portion for successively reading each of the series shots of the image data and the position data corresponding thereto from the first storing portion; a characteristic image detection portion for successively detecting a characteristic value of each of the series shots of the image data from the reading portion; a peak detecting and outputting portion for detecting a peak of the characteristic values successively detected and outputting the position data from the reading portion corresponding to the peak.

The fourth road shot image managing apparatus may further include: a second storing portion for storing the image data; a writing portion for successively writing the one of the series shots of the image data corresponding to the peak in the second storing portion; and a reading and outputting portion for reading and outputting the image data stored in the second storing portion In response to a request.

According to an embodiment of the present invention there is provided a fifth road shot image managing apparatus including: a first storing portion for storing sets of image data of series shots along a road and position data, each series shot of the image data and each of the position data being correspondingly stored; a reading portion for successively reading each of the series shots of the image data of each of the sets and position data corresponding thereto from the first storing portion; a characteristic image detection portion for successively detecting a characteristic value of each of the series shots of the image data of each of the sets from the reading portion; a first peak detecting portion for successively detecting a first peak of the characteristic values of the series shots of the image data of any one of the sets and the positional data corresponding to the first peak; a second peak detection portion for detecting second peaks of the characteristic values of the image data of the other of the sets within a predetermined position interval from the position of the position data of the first peak and detecting position data corresponding to the second peaks; an averaging portion for averaging the position data of the first peak and the second peaks to output an average peak position.

According to an embodiment of the present invention there is provided a fifth road shot image managing apparatus including: a first reading portion for reading data in a recording medium storing different types of image data of series shots along a road and position data and attitude data of each of the series shots of each of different types of the image data with correspondence therebetween; an input portion for inputting instruction position data and instruction attitude data, the first reading portion reading the attitude data and position data of each of the series shots of each of different types of the image data respectively corresponding to the instruction position data; and a second reading portion responsive to the input portion and the first reading portion for reading one of the series shots of one of different types of the image data in accordance with the position data and the attitude data from the first reading portion, and instruction attitude data to output the one of the series shots of different types of the image data.

According to an embodiment of the present invention there is provided a sixth road shot image managing apparatus including: a first storing portion for storing image data of series shots along a road and position data, each series shot of the image data and each of the position data being correspondingly stored; a reading portion responsive to a reading command for reading one of the series shots of the image data and the position data corresponding thereto from the first storing portion; a display for displaying the one of the series shots of the image data from the reading portion; a data generation portion for generating type data in response to an operation; a second storing portion for storing the image data; and a writing portion for correspondingly writing the one of series shots of the image data and the position data from the reading portion in the second storing portion and further correspondingly writing the one of series shots of the image data and the position data from the reading portion in the second storing portion with the type data from data generation portion in the presence of the operation

According to an embodiment of the present invention there is provided a seventh road shot image managing apparatus including: a reading portion for reading data in a recording medium storing image data of series shots along a road and position data, each series shot of the image data and each of the position data being correspondingly stored, the reading portion successively reading each of the series shots of the image data and the position data corresponding thereto from the first storing portion; a second storing portion for storing the image data; a thinning portion responsive to the reading portion for successively thinning the series shots of the image data at a predetermined interval of a value of the position data and successively writing thinned series shots of the image data in the second storing portion; a characteristic image detection portion for successively detecting a characteristic value of each of the series shots of the image data from the reading portion; a judging portion for judging whether each of the series shots of the image data is to be written in accordance with the characteristic value; and a writing portion for further writing the one of the series shots of the image data judged to be written in the second storing portion, wherein the second storing portion stores the thinned series shots of the image data and the one of the series shots of the image data.

According to an embodiment of the present invention there is provided an eighth road shot image managing apparatus including: a reading portion for reading data in a recording medium storing sets of image data of series shots along a road and position data, each series shot of the image data and each of the position data being correspondingly stored, the reading portion successively reading each of the series shots of the image data of each of the sets and position data corresponding thereto from the first storing portion; a characteristic image detection portion for successively detecting a characteristic value of each of the series shots of the image data of each of the sets from the reading portion; a first peak detecting portion for successively detecting a first peak of the characteristic values of the series shots of the image data of any one of the sets and the positional data corresponding to the first peak; a second peak detection portion for detecting second peaks of the characteristic values of the image data of the other of the sets within a predetermined position interval from the position of the position data of the first peak and detecting position data corresponding to the second peaks; and an averaging portion for averaging the position data of the first peak and the second peaks to output an average peak position.

The aim and features of the present invention will become more readily apparent from the following detailed description taken in conjunction with the accompanying drawings in which:

Fig. 1 is a block diagram of a road shot image managing apparatus of a first embodiment;
Fig. 2 is a block diagram of the first embodiment showing a position data input portion shown in Fig. 1;
Fig. 3 is an illustration showing an operation of the first embodiment;
Fig. 4 is an illustration showing an operation of the first embodiment;
Figs. 5 to 7 are partial block diagrams of the first embodiment showing an aerial image data managing portion, a road image data managing portion, and a patrol image data managing portion shown in Fig. 1;
Fig. 8 is an illustration of the first embodiment which is also referred in the other embodiments;
Fig. 9 is an illustration of a second embodiment of a road shot image managing apparatus;
Fig. 10 is a block diagram of the road shot image managing apparatus of the second embodiment;
Fig. 11 is a block diagram of a road image managing apparatus of a third embodiment;
Fig. 12 is a block diagram of the third embodiment showing the structure of the filter shown in Fig. 11;
Figs. 13 to 15 are illustration of the third embodiment illustrating the equidistantly thinning process;
Figs. 16A to 16D, 17, and 18 are illustrations of the third embodiment illustrating the important image detecting operation;
Fig. 19 is a block diagram of the road shot image managing apparatus of a fourth embodiment;
Fig. 20 depicts a flow chart of the fourth embodiment;
Figs. 21A to 21C are an illustration of the fourth embodiment showing data in recording mediums; and
Figs. 22A to 22C are graphical drawings of the fourth embodiment showing peak positions.

The same or corresponding elements or parts are designated with like references throughout the drawings.

<FIRST EMBODIMENT>

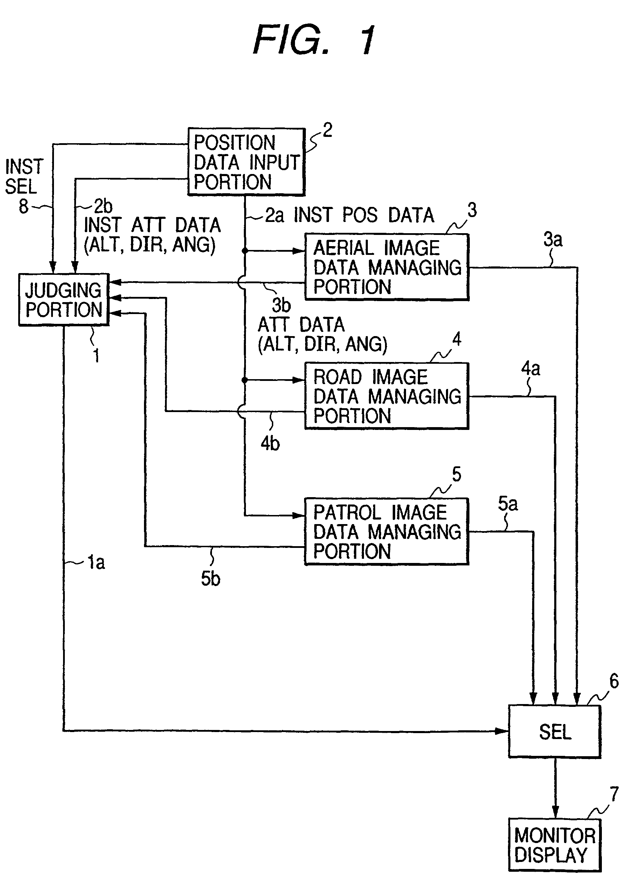

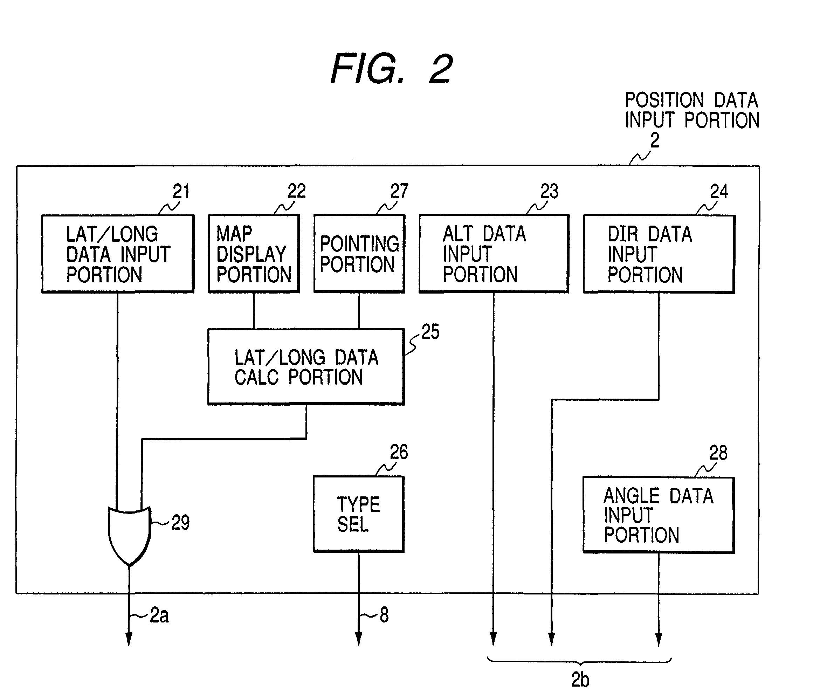

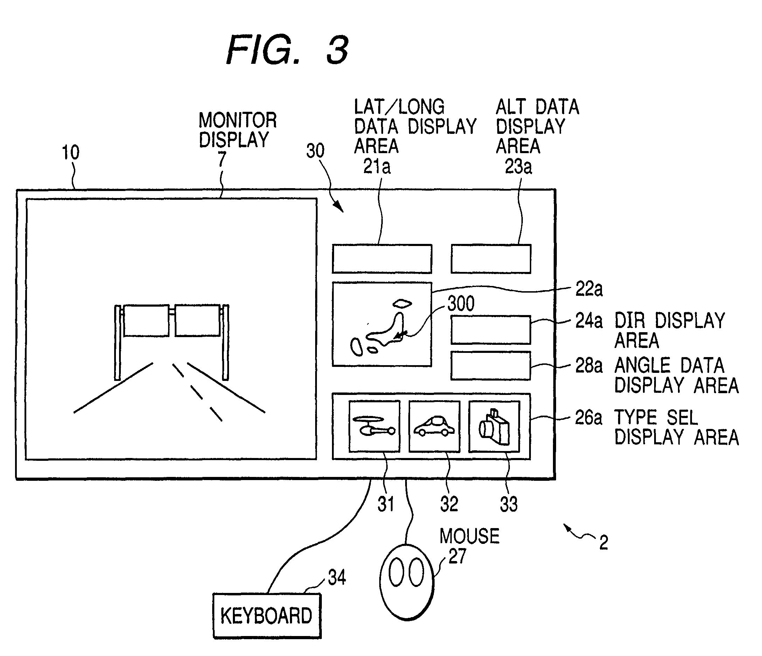

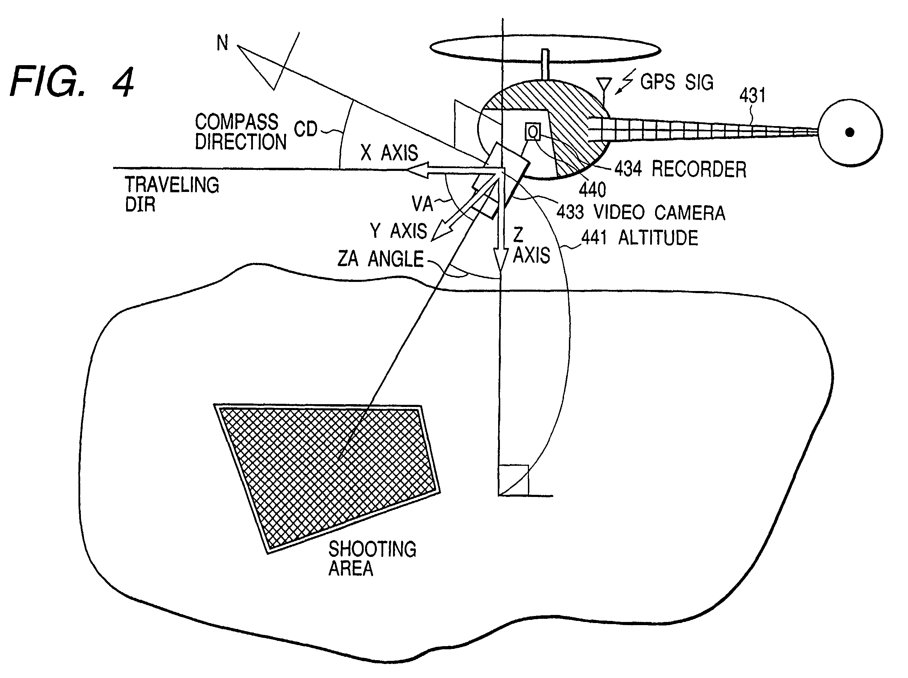

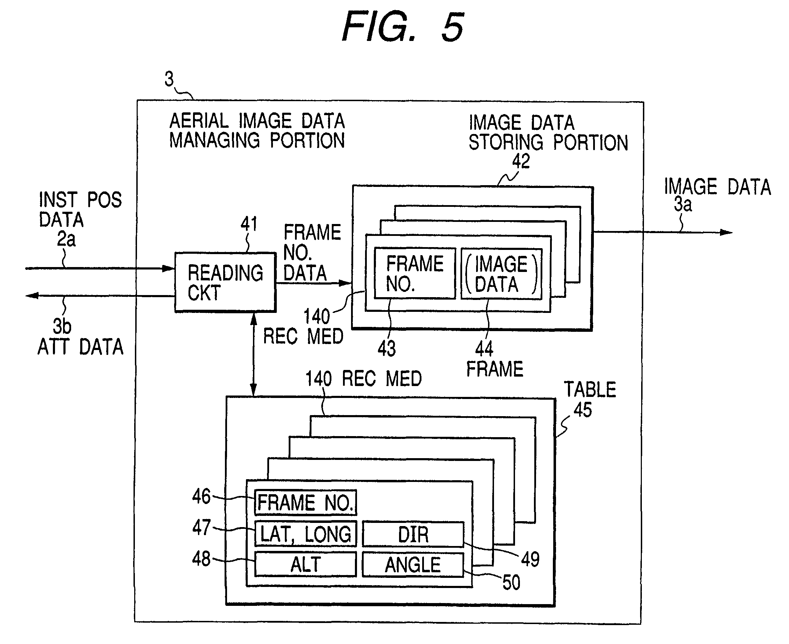

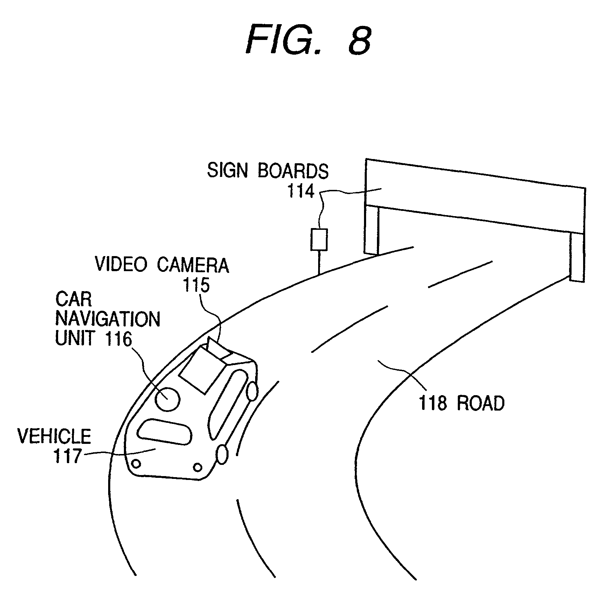

Fig. 1 is a block diagram of a road shot image managing apparatus of a first embodiment. Fig. 2 is a block diagram of the first embodiment showing a position data input portion shown in Fig. 1. Fig. 3 is an illustration showing an operation of the first embodiment. Fig. 4 is an illustration showing an operation of the first embodiment. Figs. 5 to 7 are partial block diagrams of the first embodiment showing an aerial image data managing portion, a road image data managing portion, and a patrol image data managing portion shown in Fig. 1. Fig. 8 is an illustration of the first embodiment which is also referred in the other embodiments.

The road shot image data managing apparatus of the first embodiment includes a judging portion 1, a position data input portion 2, an aerial image data managing portion 3, a road image data managing portion 4, a patrol image data managing portion 5, a selector 6, and a monitor display 7. The aerial image data managing portion 3 includes a Trading circuit 41, an image data storing portion 42, and a table 45. A recording medium 140 holds aerial image data including successive shots along a road (toll way, etc.) from a helicopter 431 and data for table 45. The road image data managing portion 4 includes a reading circuit 51, an image data storing portion 52, and a table 55. A recording medium 150 holds road image data including successive shots along the road 118 from a vehicle 117 travelling on the road 118 and data for table 55. The patrol image data managing portion 5 includes a reading circuit 61, an image data storing portion 62, and a table 65. A recording medium 160 holds road image data including successive shots along the road 118 from the vehicle on the ground, at an edge of the road 118, or on a road other than the toll road 118 and data for table 65. The position data input portion 2 inputs instruction position data 2a and instruction attitude data 2b to supply instruction attitude data 2b to the judging portion 1 and the instruction position data 2a to the aerial image data managing portion 3, the road image data managing portion 4, and the patrol image data managing portion 5.

The reading circuit 41 of the aerial image data managing portion 3 searches the latitude and longitude data 47 corresponding to (agreeing or nearest to) the instruction position data 2a including instruction attitude and longitude data and reads the searched latitude and longitude data 47, the corresponding frame number data 46, the corresponding altitude data 48, the corresponding direction data 49, and the corresponding angle data 50 to the reading circuit 41. The reading circuit 41 supplies the corresponding frame number data 46 to the image data storing portion 42 to send the image data 3a to the selector 6. At the same time, the reading circuit 41 supplies the corresponding attitude data 3b to the judging portion 1.

The reading circuit 51 of the road image data managing portion 4 searches the latitude and longitude data 57 corresponding to (agreeing or nearest to) the instruction position data 2a including instruction latitude and longitude data and reads the searched latitude and longitude data 57, the corresponding frame number data 56, the corresponding altitude data 58, the corresponding direction data 59, and the corresponding angle data 60 to the reading circuit 51. The reading circuit 51 supplies the corresponding frame number data 56 to the image data storing portion 52 to read the image data 4a of one of successive shots of which position data corresponds to the instruction position data 2a and supplies it to the selector 6. Moreover, the reading circuit 41 supplies the corresponding attitude data 4b to the judging portion 1.

The reading circuit 61 of the patrol image data managing portion 5 searches the latitude and longitude data 57 corresponding to (agreeing or nearest to) the instruction position data 2a including instruction latitude and longitude data and reads the searched latitude and longitude data 67, the corresponding frame number data 66, the corresponding altitude data 68, the corresponding direction data 69, and the corresponding angle data 70 to the reading circuit 61. The reading circuit 61 supplies the corresponding frame number data 66 to the image data storing portion 62 to read the image data 5a of one of successive shots of which position data corresponds to the instruction position data 2a and supplies it to the selector 6. Moreover, the reading circuit 61 supplies the corresponding attitude data 5b to the judging portion 1.

The judging portion 1 compares the attitude data 3a, 4a, and 5a from the aerial image data managing portion 3, the road image data managing portion 4, and the patrol image data managing portion 5 with the instruction attitude data 2b from the position data input portion 2 and determines one of the aerial image data managing portion 3, the road image data managing portion 4, and the patrol image data managing portion 5 which outputs the attitude data corresponds (agrees or is nearest) to the instruction attitude data 2b and supplies a selection signal 1a to the selector 6. More specifically, the judging portion 1 calculates differences between the instruction attitude data and the attitude data 3a, 4a, and 5a and detects one of the aerial image data managing portion 3, the road image data managing portion 4, and the patrol image data managing portion 5 of which attitude data provides the lowest difference.

The selector 6 supplies either of image data 3a, 4a, 5a to the monitor display 7 in accordance with the selection signal 1a, that is, the comparing result of the judging portion 1.

The judging portion 1 can receive instruction selection data 8 from the position data input portion 2 in response to an operation and supplies the selection signal 1a to the selector 6 to select one of the image data 3a, 4a, and 5a irrespective of the attitude data from the aerial image data managing portion 3, the road image data managing portion 4, and the patrol image data managing portion 5 in the presence of the operation.

As shown in Fig. 2, the position data input portion 2 includes a latitude/longitude data input portion 21, a map display portion 22, a pointing portion 27, a latitude and longitude data calculation portion 25, an altitude data input portion 23, a direction data input portion 24, an angle data input portion 28, and a type selection circuit 26.

The latitude/longitude data input portion 21 for receiving latitude data, longitude data and outputs the latitude data and longitude data as the instruction position data 2a in response to an operation through an output circuit 29 for OR logic. The map display portion 22 storing map data and displays a map image at a desired place in response to an operation by an operator. The pointing portion 27 inputs the location of the point of which shot of image is to be displayed with a cursor 300 over the displayed the map. The latitude and longitude data is calculated from the map data and the position of the cursor 300 with respect to the map image by the latitude/longitude data calculation portion 25. The output circuit 29 outputs the latitude and longitude data 2a from the latitude/longitude data input portion 21 in the presence of the operation to the latitude/longitude data input portion 21 and outputs the latitude and longitude data 2a from the latitude/longitude data calculation portion 25 in the presence of the operation to the latitude/longitude data calculation portion 25.

The altitude data input portion 23 receives altitude data and supplies it to the aerial image data managing portion 3, the road image data managing portion 4, and to the patrol image data managing portion 5. The altitude data may be meters above sea level or the altitude from the ground to the vehicle 117 on the toll road 118 or the altitude of the helicopter 431. The vehicle under patrolling may be on the ground. In this embodiment, the altitude data indicate the altitude from the ground.

The direction data input portion 24 inputs direction data and supplies it to the aerial image data managing portion 3, the road image data managing portion 4, and the patrol image data managing portion 5. The direction data may be a compass direction CD of the helicopter 431 or the direction of the camera carried by a patrol. Moreover, the direction may be expressed by a direction with respect to the direction of the road 118. The video camera 115 or 433 on the vehicle 117 or the helicopter 431 is directed to the travelling direction of the vehicle 117 or the helicopter 431.

The angle data input portion 28 input angle data and supplies it to the aerial image data managing portion 3, the road image data managing portion 4, the patrol image data managing portion 5. The angle data indicates a vertical angle VA or an angle ZA between the line between the camera and the shot area and the Z axis (the vertical line). In this embodiment, the angle data is expressed by the angle ZA.

As shown in Fig. 3, a terminal 10 including the monitor display 7 and the position data input portion 2. The position data input portion 2 further includes a display area 30, a keyboard 34, and a mouse 27 to assist the input operation. The display area 30 includes a latitude/longitude data display area 21a, an altitude data display area 23a, a direction display area 24a, an angle data display area 28a, a type selection display area 26a. The type selection display area 26a includes icons 31 to 33 respectively indicating the image data shot by the helicopter 431, the image data shot by vehicle 117 on the road 118, and the image data shot by a camera carried by a patrol man. If the operator inputs the position data but does not enter the attitude data and operates the mouse 27 to locate the cursor 300 on the icon 31 and clicks the mouse 27 to enter the data, the type selector 26 supplies the instruction selection data 8 to the selector 6 which supplies the image data 3a from the aerial image data managing portion 3. Similarly, if the operator inputs the instruction position data but does not enter the instruction attitude data and operates the mouse 27 to locate the cursor 300 on the icon 32 and clicks the mouse 27 to enter the data, the type selector 26 supplies the instruction selection data 8 to the selector 6 which supplies the image data from the road image data managing portion 4. If the operator inputs the position data but does not enter the instruction attitude data and operates the mouse 27 to locate the cursor 300 on the icon 33 and clicks the mouse 27 to enter the data, the type selector 26 supplies the instruction selection data 8 to the selector 6 which supplies the image data from the patrol image data managing portion 5. However, if the operator does not operates the type selection portion 26 and does not input the instruction attitude data, the judging portion 1 automatically selects the image data from the road image data managing portion 4 with priority.

When the operator inputs the instruction attitude data and inputs the instruction position data, the judging portion 1 judges the selected one of the different image data and supplies the selection signal 1a to the selector 6, automatically.

The position data is inputted as follows:

The operator operates the keyboard 34 or the mouse 27 to input the position data. If the operator inputs the position data with the keyboard 34, the operator operates the keyboard 34 to input the latitude and longitude data with watching the latitude and longitude data display area 21a. If the operator inputs the instruction position data with the mouse 27, the operator operates the mouse 27 to operate the pointing portion 27 to locate the cursor 300 at a desired place on the map image on the map display portion 22. If the map image is displayed at a small scale, the map image is automatically enlarged to provide for necessary accuracy of the position data. The pointing portion 27 supplies the position of the cursor 300 on the displayed map image to the latitude and longitude data calculation portion 25. The map display portion 22 displays the map image on the map image area 122 and supplies the position data of the displayed image. The latitude and longitude data calculation portion 25 calculates the latitude data and longitude data from the position data of the displayed image and the position of the cursor 140 and supplies the calculated latitude and longitude data as the instruction position data 2a to the aerial image data managing portion 3, the road image data managing portion 4, and the patrol image data managing portion 5 through the outputting circuit 29.

The instruction attitude data is inputted as follows:

The operator operates the keyboard 34 to input the altitude data, the direction data and angle data with confirming the displayed numbers on the input display area 30. That is, the inputted altitude data is displayed on the altitude data display area 23a, the direction data is displayed on the direction display area 24a, and the angle data is displayed on the angle data display area 28a. Then, the operator clicks the mouse 27 or depresses an enter key (not shown) on the keyboard 34 to enter the attitude data 2b which is supplied to the judging portion 1 as instruction attitude data 2b.

The judging portion 1 judges which one of the different types of image data from the aerial image data managing portion 3, the road image data managing portion 4, and the patrol image data managing portion 5 when at least one of the attitude data is inputted as the instruction attitude data. Then, the judging portion 1 automatically judges which image data 3a, 4a, or 5a is to be selected.

As shown in Fig. 5, in the image data storing portion 42 each frame 44 of image data is correspondingly stored with frame number data 43. The table 45 stores each frame number data and the latitude and longitude data 47, the altitude data 48, the direction data 49, and angle data 50, correspondingly. The instruction position data 2a is supplied to the reading circuit 41 and searches the corresponding latitude and longitude data 47 in the table 45. If the corresponding latitude and longitude data 47 is present, the reading circuit 41 supplies the corresponding frame number data 46 to the image data storing portion 42. The reading circuit 41 reads and supplies a frame of the image data 44 in the image data storing portion 42 corresponding to the frame number data 46 from the table 45 to the selector 6 as the image data 3a. The table 45 supplies the corresponding altitude data 48, the direction data 49, and angle data 50 to the judging portion 1 via the reading circuit 41 if the altitude data 48, the direction data 49, or the angle data 50 is stored with the frame data 46.

As shown in Fig. 4, the helicopter 431 carrying the video camera 433 horizontally flies at altitude 441 in the travelling direction which is assumed as the X axis and deviates from the north by a compass direction CD. The video camera 433 takes image on the shooting area with an angle made between the optical axis of the video camera 433 and the Z axis which corresponds to the vertical line thereat. A recorder 434 stores each frame of the image data from the video camera 433 with frame number number data, the position data, the altitude data 48, the direction data 49, and the angle data 50 on the recording medium 440. The latitude and longitude data and the direction data is obtained from the GPS signal. The altitude is detected by a radio altimeter or calculated from the altitude difference between the helicopter and the ground which is determined by the latitude data and the longitude data there. The angle data is detected by a position detector (not shown) for detecting the position of the video camera 433.

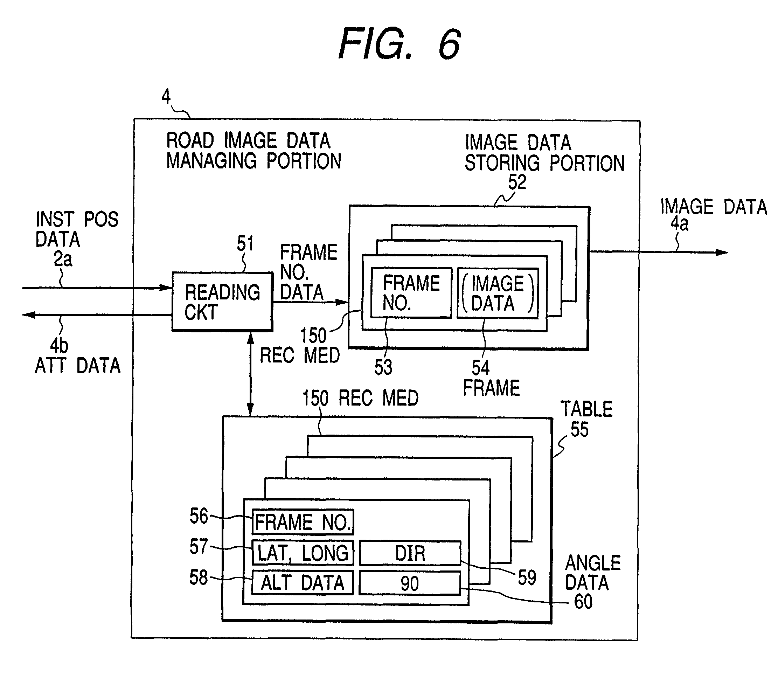

As shown in Fig. 6, in the road image data managing portion 4, the image data storing portion 52 correspondingly stores each frame 54 of the image data taken by a camera on the vehicle on the road and frame number data 53. The table 55 stores each frame number data 56 and the latitude and longitude data 57, the altitude data 58, the direction data 59, and angle data 51, correspondingly. The instruction position data 2a is supplied to the table 55 which searches the corresponding latitude and longitude data 57. If the corresponding latitude and longitude data 57 is present, the corresponding frame number is supplied to the image data storing portion 52 by the reading circuit 51. The image data storing portion 52 reads and supplies a frame 54 of the image data corresponding to the frame number data from the table 55 to the selector 6 as the image data 4a. The table 55 supplies the corresponding altitude data 58, the direction data 59, and angle data 51 to the judging portion 1 if any of the altitude data 58, the direction data 59, or the angle data 51 is stored with the frame data 56 in the table 55. In the case of the image data taken by the video camera 115 on the vehicle 117 on the road 118, the angle ZA is constant and is 90. The position data and the attitude data is obtained as similar to the aerial image data managing portion 3.

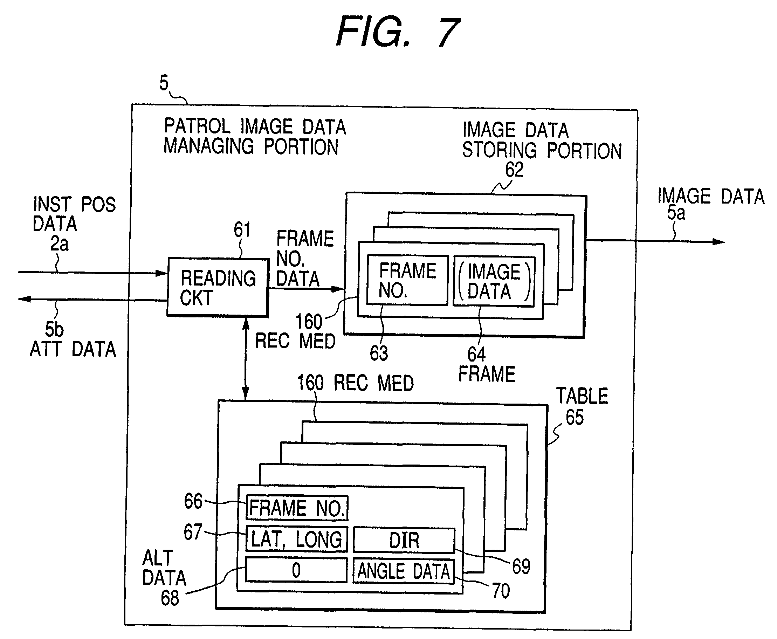

As shown in Fig. 7, in the patrol image data managing portion 4, the image data storing portion 62 correspondingly stores each frame 64 of the image data taken by a camera (not shown) on a patrol vehicle (not shown) on a road or the ground and frame number data 63. The camera may be an electronic still camera having a memory carried by a patrolling man. The table 65 stores each frame number data 66 and the latitude and longitude data 67, the altitude data 68, the direction data 69, and angle data 61, correspondingly. The instruction position data 2a is supplied to the table 65 which searches the corresponding latitude and longitude data 67. If the corresponding latitude and longitude data 67 is present, the corresponding frame number is supplied to the image data storing portion 62. The image data storing portion 62 reads and supplies the frame 64 of the image data corresponding to the frame number data from the table 65 to the selector 6 as the image data 5a. The table 65 supplies the corresponding direction data 69, and angle data 70 to the judging portion 1 if any of the altitude data 68, the direction data 69, or the angle data 70 is stored with the frame data 66 in the table 55. The altitude data 68 is constant and zero if the vehicle or a patrol man on the ground. The position data and the attitude data is obtained as similar to the aerial image data managing portion 3 from a portable navigation apparatus.

As mentioned, one of the image data 3a, 4a, and 5a is selected by the selector 6 in accordance with the selection signal 1a and outputted or displayed on the monitor display 7.

In this embodiment, the aerial image data managing portion 3 includes the recording medium 140 therein. In the case that the successive shots along the road 118 are recorded by the video camera 433 on a video tape in a video tape cassette, the image data, the position data, and the attitude data is read from the video tape by a video tape deck and stored in a hard disc (fixed) as the recording medium 140. However, it is also possible that the successive shots along the road 118 are recorded by the video camera 433 on a digital video disc RAM (removable) with position data and the attitude data and the digital video disc is set in the aerial image data managing portion 3 for reproducing by an operator as the recording medium 140. The road image data managing portion 4 is similar to the aerial image data managing portion 3. On the other hand, in the case of the patrol image data managing portion 5, the successive shots along the road 118 are recorded by the electronic still camera on a memory card with the position data and the attitude data and the data is read from the memory card and stored in a hard disc as the recording medium 160. Moreover, it is also possible to take conventional chemical photographs by a patrol man and the images on the photographs after development are read and stored in a hard disc as the recording medium 160.

Moreover, it is also possible that different types of successive shot of image data are recorded by video tape cassettes and tables 45, 55, and 65 are formed on a floppy disc by a personal computer (not shown) which records the position data and attitude data and the frame number data. Then a plurality of video decks reproduce the images from the video tape cassettes at the same time as the aerial image data managing portion 3, the road image data managing portion 4, and the patrol image data managing portion 5. Then, one of shots is selected by the selector 6. The video tape decks are controlled by the personal computer as the tables 45, 55, and 56, and the judging portion 1 and the position data input portion 2 to reproduce one of shots on the monitor display 7.

<SECOND EMBODIMENT>

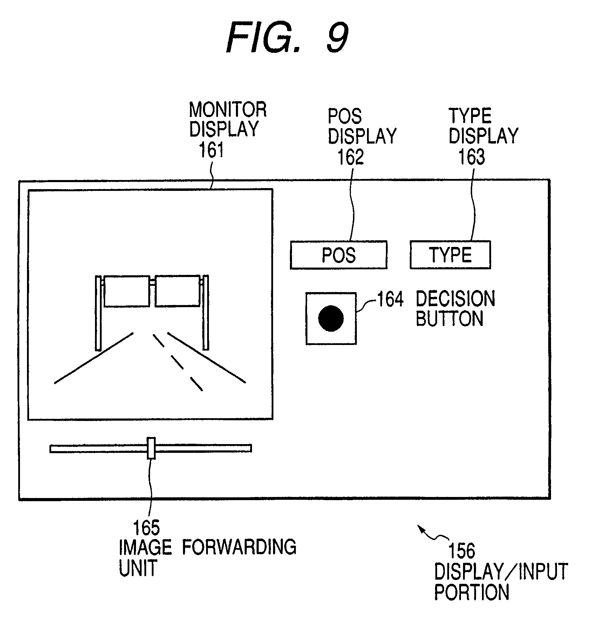

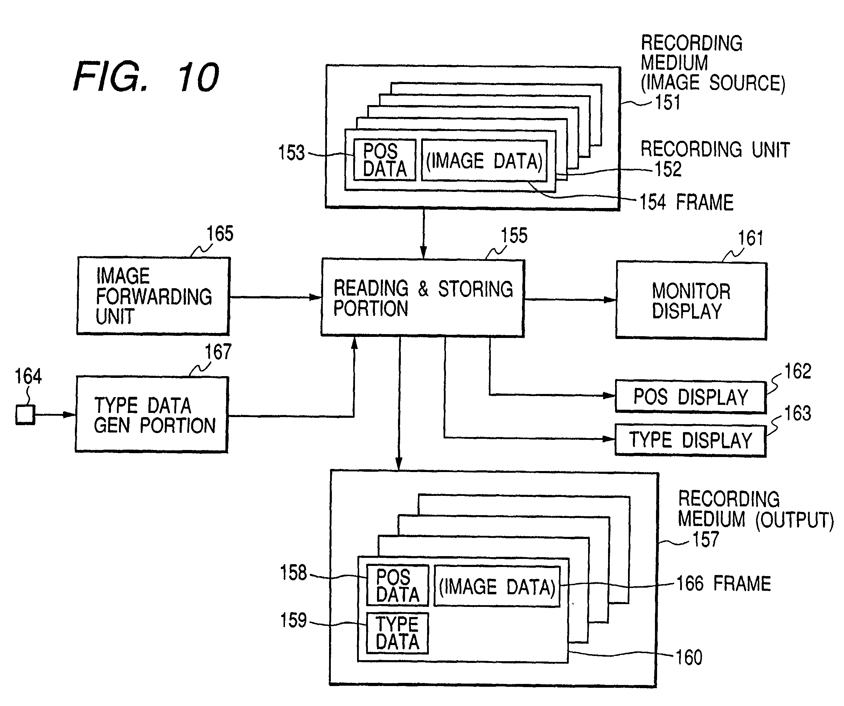

Fig. 9 is an illustration of a second embodiment of a road shot image managing apparatus. Fig. 10 is a block diagram of the road shot image managing apparatus of the second embodiment. The road shot image managing apparatus of the second embodiment includes an image forwarding unit 165, a reading and storing portion 155, a monitor display 161, a position display 162, a type display 163, a decision button 164, and a type data generation portion 167.

The image forwarding unit 165 generates instruction position data to forward or backward the display image of the road. A recording medium 151 stores the successive shots of the image data along the road such that position number data 153 and a frame 154 of the image data is stored correspondingly. The reading and storing portion 155 searches the frame number data 153 corresponds to the instruction position data from the image forwarding unit 165 and reads the frame corresponding to the frame number data 153. The image data of the frame 154 is supplied to the monitor display 161 and stored in the recording medium 157. The position data 153 is displayed on the position display 162.

If the operator watching the monitor display 161 depresses the decision button 164, the type data generation portion 167 generates and supplies type data to the reading and storing portion in response to the decision switch 164. The reading and storing portion 155 correspondingly stores the type data 159 with the position data 158 and the frame 166 on a recording unit 160 on the recording medium 157.

The type data from the type data generation portion 167 is displayed on the type display 163.

The position data 158 and the frame 166 and the type data 159 may be overwritten on the recording medium in accordance with the type of the recording medium 151.

At the next operation, if the operator operates the image forwarding unit 165 and the type data 172 is stored with the position data corresponding to the instruction position data 165a, the type data indicative of the type of the image data, that is, the way that the image is taken, is automatically outputted and displayed on the type display 163. Moreover, it is possible to display the image on the road 118 is adaptively displayed in accordance with the type data stored with the frame 116.

The recording medium 151 and 157 may be removable from the road image managing apparatus of the second embodiment or fixed to the road image managing apparatus of the second embodiment as similar to the first embodiment.

<THIRD EMBODIMENT>

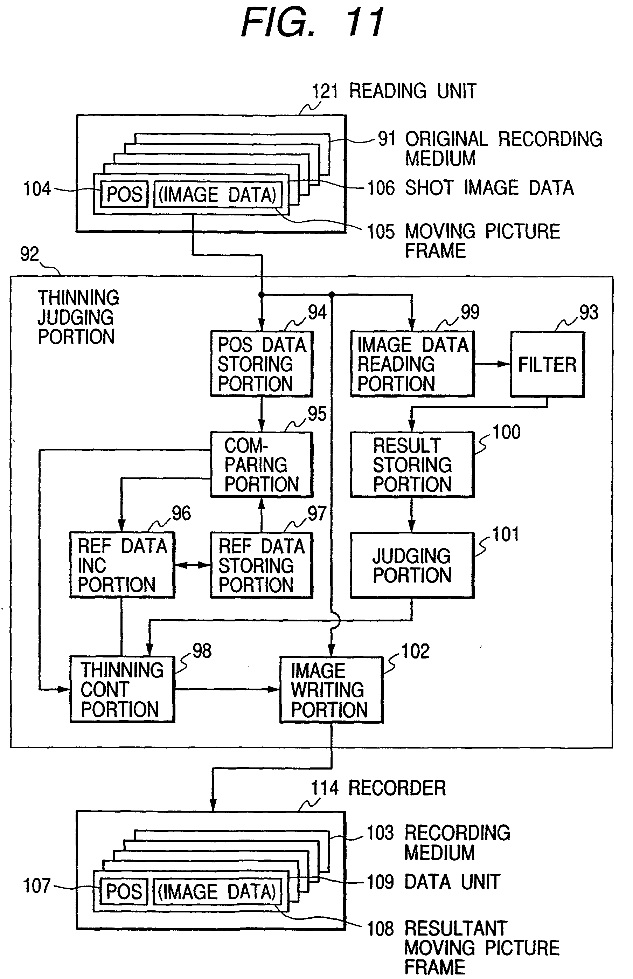

Fig. 11 is a block diagram of a road image managing apparatus of a third embodiment. The road image managing apparatus of the third embodiment includes a reading unit 121 for reading data on an original recording medium 91, a thinning judging portion 92, and a recorder 114.

The original recording medium 91 stores position data and image data of successive images along the road 118. Each moving picture frame of the image data is stored with each position data correspondingly as shot image data 106, which is a recording unit. The reading unit 121 reads and supplies the position data 104 and the moving picture frame 105 every shot image data 106 to the thinning judging portion 92.

The thinning judging portion 92 includes a position data storing portion 94, a comparing portion 95, a reference data storing portion 97, a reference data increasing portion 96, a thinning control portion 98, an image data reading portion 99, a filter 93, a result storing portion 100, and a judging portion 101, and an image writing portion 102. The position data storing portion 94 receives the position data 104 from the original image data storing portion 91 and stores the position data 104. The reference data increase portion 96 increases the reference data in response to the comparing portion 95 at regular interval for example, 5 m. The reference data storing portion 97 stores the reference data from the reference data increasing portion 96 and supplies it to the comparing portion. More specifically, the position data increasing portion 96 adds a predetermined value to the previous reference data from the reference data storing portion 97 to increase the reference data. The increased reference data is compared with the position data from the reference data storing portion 94. If the position data from the position data storing portion 94 is greater than the reference data from the reference data storing portion 97, this is informed to the thinning control portion 98. Therefore, comparing portion 95 informs the comparing result every predetermined distance, for example, every 5 m, that is, 0 m, 5 m, 10 m, ···. In fact, the comparing result is informed at 0.5 m, 5.5 m, 10.6 m in accordance with the timing of the frames and the speed.

Thinning control portion 98 operates the image writing portion 102 to write the position data 104 and the moving picture frame 105 in the recording medium 103 as resultant position data 107 and the resultant moving picture frame 108 of the image data image data. Therefore, moving picture frames of the image data is substantially equidistantly thinned and stored.

On the other hand, there may be an important moving picture frame of the image data between two consecutive resultant moving picture frames of the image data thinned by under control of the comparing portion 95. In such a case, the thinning judging portion 92 judges whether the moving picture frame of the image data is to be additionally stored. The image data reading portion 99 reads the moving picture frame 105 of the image data and supplies it to the filter 93. The filter 93 detects the characteristic of the moving picture frame 105 of the image data. The result storing portion 100 stores the result of detecting the characteristic of the moving picture frame 105 of the image data. The judging portion 101 compares the result from the result storing portion 101 with a reference. If the result form the result storing portion 101 exceeds the reference, the judging portion commands the thinning control portion 98 to operate the image writing portion 102 to stored the moving picture frame 105 of the image in the resultant image storing portion 103. Therefore, the thinning control portion 98 operates the image writing portion 102 to equidistantly store the moving picture frames of the image data and further the moving picture frames of the image data showing a high characteristic image.

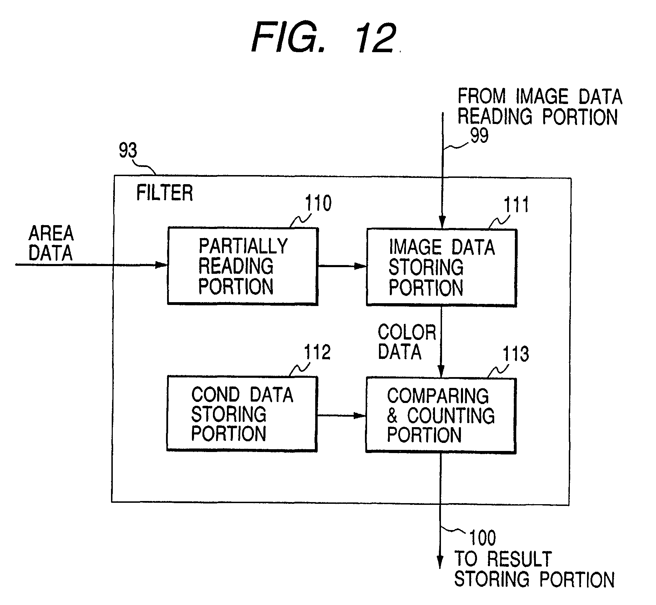

Fig. 12 is a block diagram of the third embodiment showing the structure of the filter 93 shown in Fig. 11.

The filter 93 includes a partially reading portion 110, an image data storing portion 111, a condition data storing portion 112, and a comparing and counting portion 113. The partially reading portion 110 stores predetermined area data indicating the area on the reproduced screen area where the characteristic points is to be detected. Alternatively, the area data may be inputted by the operator. The partially reading portion 110 reads a portion of the moving picture frame of the image data in the image data storing portion 111 in accordance with the area data. That is, the partially reading portion 110 reads the image data only at the area on the screen area indicated by the area data. The condition data storing portion 112 stores the condition for detecting the characteristic image. It is assumed that the moving picture frame of the image data includes red, green, and blue colors each having a value of 0 to 255. For example, the condition for judging is that G>128, G>R, and G>B. If color values at the pixel satisfy the condition, the comparing and counting portion 113 counts up by one.

As shown in Fig. 8, sign boards 114 are provided along the road 118. The sign boards has a specific background color. For example, green. Then, if the counts is greater than a predetermined value, there is a high possibility that a sign board is shown in the moving picture frame. Such moving picture frame is supposed to provide important information, so that it is judged that this moving picture is to be stored in the resultant image storing portion 103.

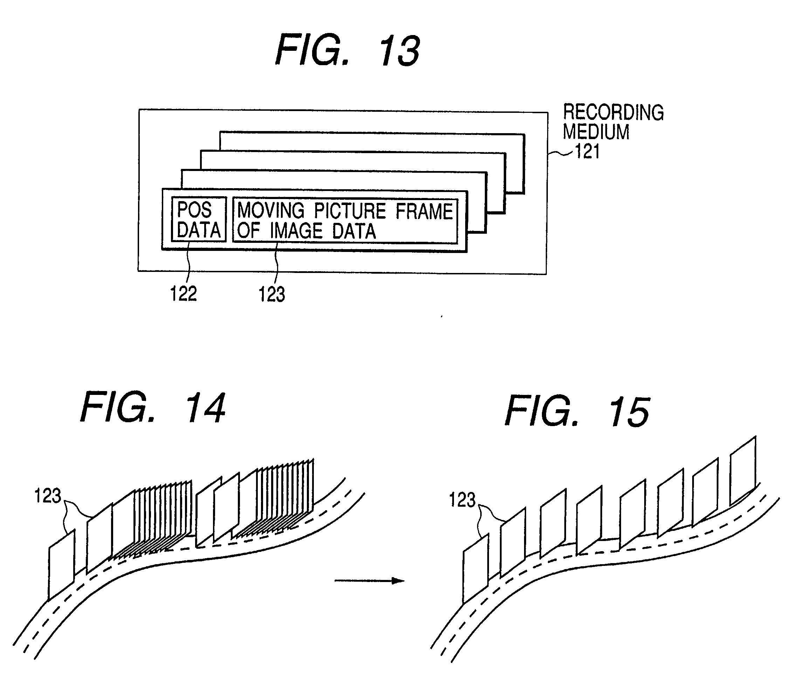

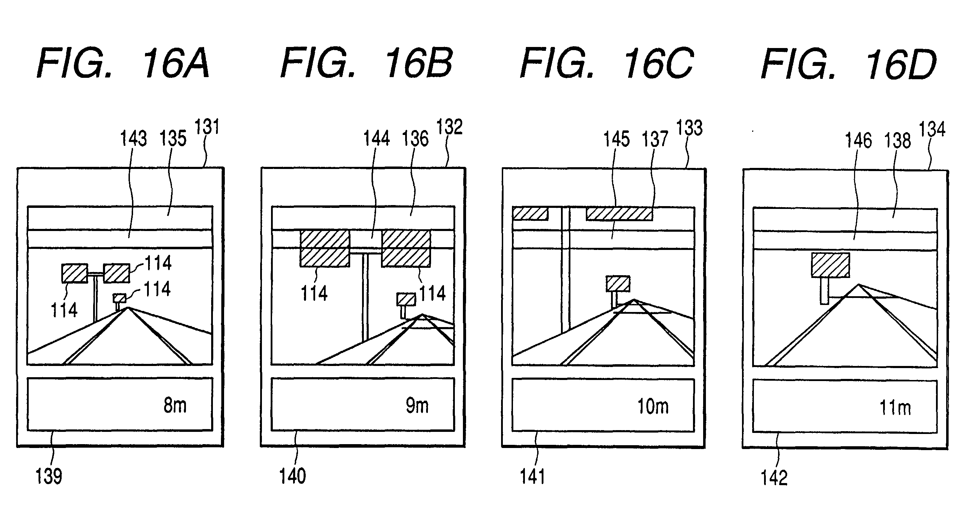

Figs. 13 to 15 are illustrations of the third embodiment illustrating the equidistantly thinning process. On the other hand, Figs. 16A to 16D, 17, and 18 are illustrations of the third embodiment illustrating the important image detecting operation.

As shown in Fig. 8, the vehicle 117 travels on the road 118 and the video camera 115 takes successive images along the road 118 and stores the image data with the position data from the car navigation unit 116.

As shown in Fig. 13, the each moving picture frame of the image data 123 and the position data 122 are correspondingly stored in the recording medium 121. Fig. 14 shows respective moving picture frames before thinning. The vehicle 117 travels at various speeds, so that distance between two consecutive moving picture frames varies. Then, the moving picture frames is equidistantly thinned as shown in Fig. 15. However, in this case, there is a possibility of losing a moving picture frame which includes important information such as the sign board 114.

Figs. 16A to Fig. 16D show successive images from the travelling vehicle 117.

Screen images 131 to 134 shows the successive moving picture frames 135 to 138 with image of position data 139 to 142. Respective screen images 131 to 134 include areas 143 to 146 which show the area on the moving picture frames 135 to 138 to be read by the partially reading portion 110.

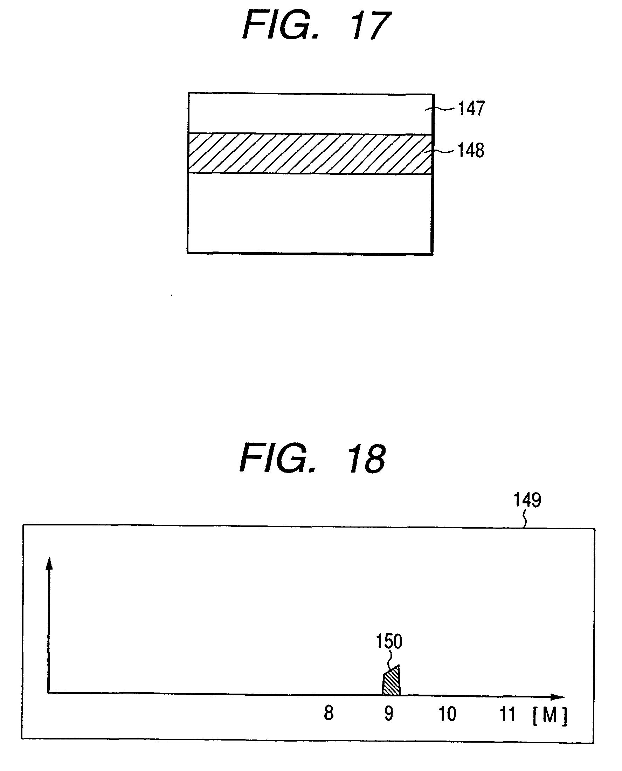

As shown in Fig. 16B the sign boards 114 is shown clearly and enters the area 144, so that the count value in the comparing and counting portion 113 at the moving picture frame 136 provides a peak. Fig. 17 shows the area 148 on the screen image 147 to be read by the partially reading portion 110.

Fig. 18 shows variation of the count values for respective moving picture frames 135 to 138. The count of pixels showing the green color at the moving picture frame of which position data around 9 m shows a peak 150. This moving picture frame is supposed to include important information, that is, include the image of the sign board 114.

The judging portion 101 judges whether the count value is higher than a reference or whether there is the peak 150. If the moving picture showing the peak 150 is stored by the image writing portion 102, the image writing portion 102 can read the moving picture frame of the image data showing the peak 150 from the digital image storing portion 121 after the peak 150 is detected.

The recording medium 91 and 103 may be removable from the road image managing apparatus of the third embodiment or fixed to the road image managing apparatus of the third embodiment as similar to the first embodiment.

<FOURTH EMBODIMENT>

The road shot image managing apparatus of a fourth embodiment has substantially the same structure as that of the third embodiment. The difference is that the position of the moving picture frame of the image data showing the peak which is supposed to include the sign board 114 is detected from a plurality of sets of image data which are taken by a plurality of times of taking pictures along the road 118 and the position is determined by averaging, wherein the corresponding peaks are detected.

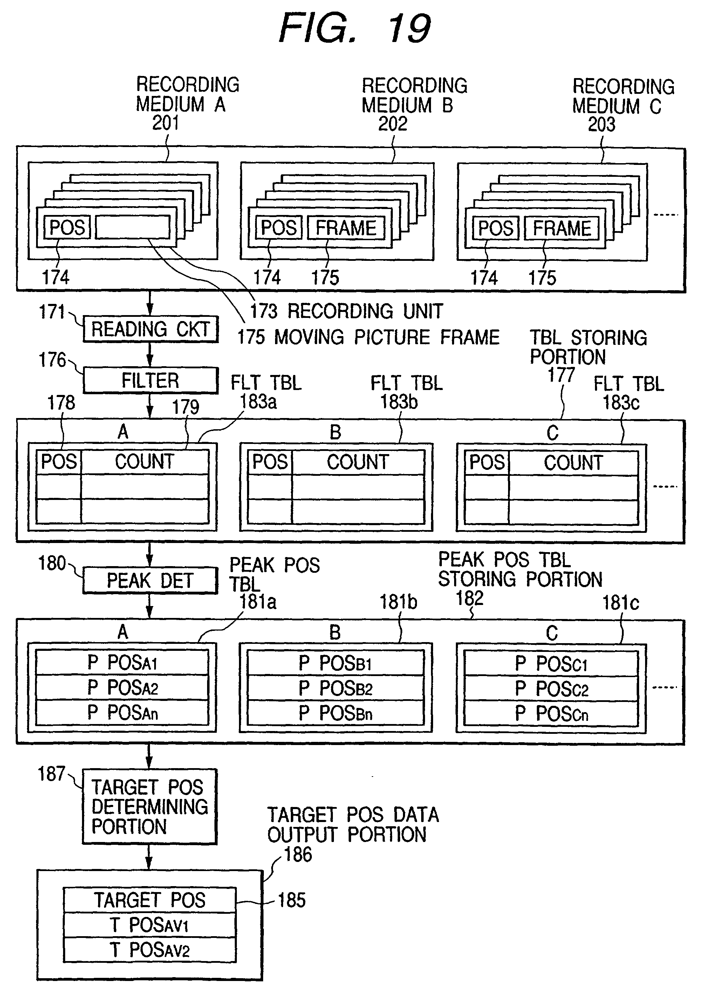

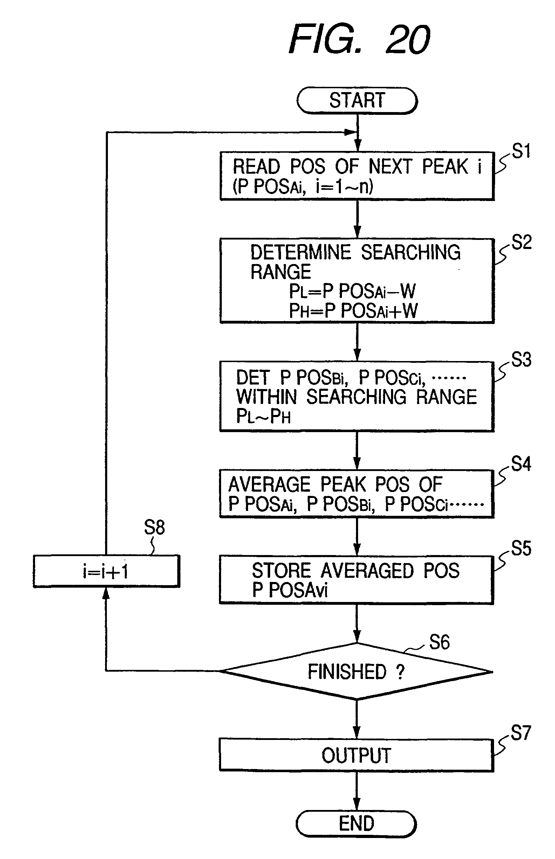

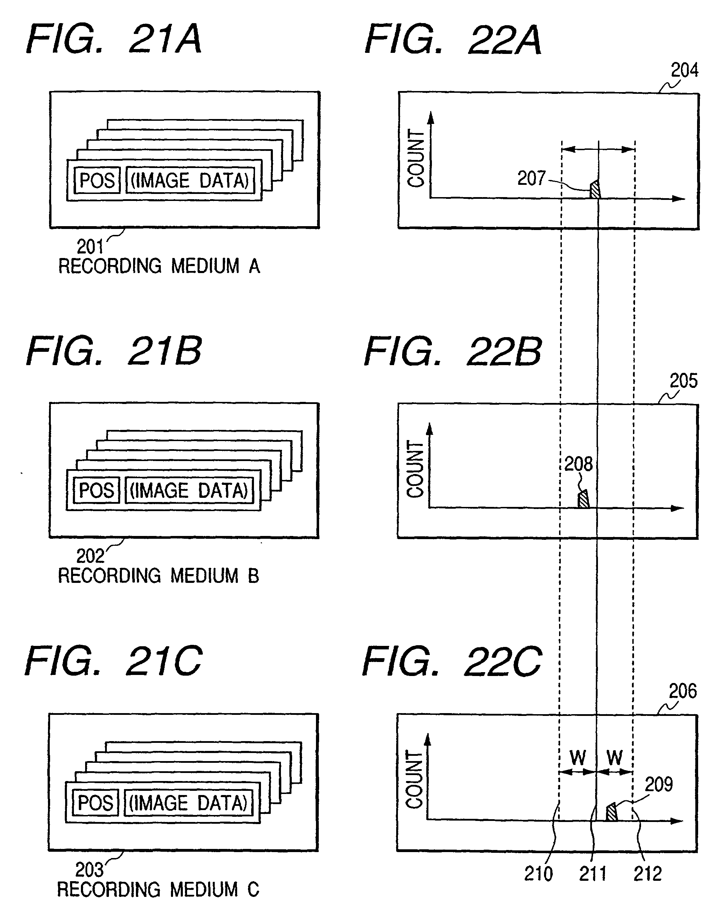

Fig. 19 is a block diagram of the road shot image managing apparatus of the fourth embodiment. Fig. 20 depicts a flow chart of the fourth embodiment. Figs. 21A to 21C are illustrations of the fourth embodiment showing recording mediums storing moving picture frames of the image data. Fig. 22A to 22C are graphical drawings of the fourth embodiment showing peak positions.

The road shot image managing apparatus of the fourth embodiment includes a reading circuit 171, a filter 176, a table storing portion 177, a peak detector 180, a peak position table storing portion 182, a target position determining portion 187, and a target position data output portion 186. The reading circuit 171 successively reads each moving picture frames 175 and the corresponding position data 174 from each recording unit 173 in the recording medium A 201. The image data in the recording medium A 201 is successively taken by travelling on the road 118 once. After reading the image data and the position data from the recording medium A 201, the reading circuit 171 reads each of moving frame 175 and the corresponding position data 174 from the recording medium B 202. The image data in the recording medium B 202 is successively taken by travelling on the road 118 at different time. After reading the image data and the position data from the recording medium B 202, the reading circuit 171 reads each of moving frames 175 and the corresponding position data 174 from the recording medium C 203.

The filter 176 detects the pixel of which color data values satisfy the condition mentioned in the third embodiment and counts the pixels every moving picture frame and forms filter table 183a including position data 178 and the corresponding count 179 of the recording medium A 202 in the table storing portion 177. Then, the filter 176 detects the pixel of which color data values satisfy the condition mentioned in the third embodiment and counts the pixels every moving picture frame and forms filter table 183b including position data 178 and the corresponding count 179 of the recording medium B 203 in the table storing portion 177. Then, the filter 176 detects the pixel of which color data values satisfy the condition mentioned in the third embodiment and counts the pixels every moving picture frame and forms filter table 183c including position data 178 and the corresponding count 179 of the recording medium C 203 in the table storing portion 177.

The peak detector 180 detects each peak from the filter table 183a of the recording medium A 201 to form peak position table 181a of the recording medium A 201. Then, the peak detector 180 detects each peak from the filter tables 183b of the recording medium B 202 to form peak position table 181b of the recording medium B 202. Then, the peak detector 180 detects each peak from the filter table 183c of the recording medium C 203 to form peak position table 181c of the recording medium C 203. The target position determining portion 187 determines the target positions from the peak position tables 181a to 181c. The target position data output portion 186 outputs the target position data TPOS.

The target position determining portion 187 effects determining process as shown in Fig. 20. The target position determining portion 187 reads a position of the next peak i ($PPOS_{Ai}$, i= 1 ~ n) in step s1. In the following step s2, the target position determining portion 187 determines a searching range as follows:

$$P_L = PPOS_{AI} - W$$

$$P_H = PPOS_{AI} + W$$

Then, the target position determining portion 187 determines peak positions in the image data in the recording medium B 202 and the recording medium C 203 within the searching range $P_L$ to $P_H$ in step s4. In the following step s4, the target position determining portion 187 averages the detected peak positions $PPOS_{AVI}$ which is stored in step s5. In step S6 the target position determining portion 187 judges whether the peak detection process has finished. If the peak detection process has not finished, the target position determining portion 187 increases i and processing returns to step s1. If the peak detection process has finished, the target position determining portion 187 outputs the averaged peak positions $PPOS_{AVI}$ 185.

As shown in Figs. 21A and 22A, the peak 207 is detected from the recording medium A 201 shown in Fig. 21A. Then, searching range 210 - 212 is determined. Then, the peak 208 and 209 detected from the recording medium B and C 202 and 203 shown in Figs. 22B and 22C are detected. The positions of the peaks 207 to 209 are averaged and outputted.

The recording mediums 201 to 203 may be removable from the road image managing apparatus of the fourth embodiment or fixed to the road image managing apparatus of the fourth embodiment as similar to the first embodiment.

## Claims

1. A road shot image managing apparatus comprising:

   storing means (42, 52, 62) for storing different types of image data, each type of image data comprising a series of shots along a road;
   table means (45, 55, 65) for storing position data and attitude data for each of said type of image data with correspondence therebetween;
   input means (2) for inputting instruction position data and instruction attitude data;
   first reading means (41, 51, 61) for reading said attitude data and position data of each of said different type of image data, the data read corresponding to said instruction position data; and
   second reading means (41, 51, 61 6) responsive to said input means and said first reading means for reading one of said series of shots of one of said different types of image data, said reading being in accordance with said position data and said attitude data from said first reading means, and also in accordance with said instruction attitude data, said second reading means being for outputting one of said series of shots.

2. A road shot image managing apparatus as claimed in claim 1, wherein said second reading means compares each of said attitude data from said first reading means with said instruction attitude data and determines which one of the different types of image data has corresponding attitude data having a value that is nearest to the value of said instruction attitude data, said second reading means further determining the series of shots to output in accordance with said position data from said first reading means.

3. A road shot image managing apparatus as claimed in claim 1 or 2, wherein said attitude data includes altitude data.

4. A road shot image managing apparatus as claimed in claim 1, 2, or 3, wherein said attitude data contains direction data.

5. A road shot image managing apparatus as claimed in claim 1, 2, 3 or 4, further comprising a display monitor displaying said one of said series of shots output from said second reading means.

6. A road shot image managing apparatus as claimed in claim 1, 2, 3, 4 or 5, wherein said input means comprises:

   latitude and longitude input means responsive to a first operation for inputting latitude data and longitude data and outputting said latitude data and longitude data as said instruction position data;
   position data generating means including map data storing means for storing map data, map displaying means for displaying said map data and indicating means responsive to a second operation for indicating a position on said displayed map data, said position data generating means further including position data calculating means for calculating said instruction position data in accordance with said position and said map data;
   position data outputting means for outputting said latitude data and longitude data from said latitude and longitude input means following said first operation, said latitude and longitude data being output as said instruction position data, and for outputting said instruction position data from said calculating means following said second operation; and
   altitude data inputting and outputting means for inputting and outputting said instruction altitude data.

7. A road shot image managing apparatus comprising:

   first storing means for storing image data comprising a series of shots along a road and position data of each of said series of shots, each series of shots of said image data and each of said position data being correspondingly stored;
   reading means responsive to a reading command for reading one of said series of shots and said position data corresponding thereto from said first storing means;
   display means for displaying said one of said series of shots from said reading means;
   data generation means for generating type data in response to an operation;
   second storing means for storing said image data, position data and type data; and
   writing means for correspondingly writing said one of said series of shots and said position data from said reading means in said second storing means and further correspondingly writing said one of said series of shots and said position data from said reading means in said second storing means with said type data from data generation means in the presence of said operation.

8. A road shot image managing apparatus according to claim 7, further comprising :

thinning means responsive to said reading means for successively thinning said series of shots of said image data at a predetermined interval of a value of said position data and successively writing said thinned series of shots of said image data in said second storing means; characteristic image detection means for successively detecting a characteristic value of each of said series of shots of said image data from said reading means; and judging means for judging whether each of said series of shots of said image data is to be written in accordance with said characteristic value;

wherein said writing means is for further writing said one of said series of shots of said image data judged to be written in said second storing means, wherein said second storing means stores said thinned series shots of said image data and said one of said series of shots of said image data judged to be written.

9. A road shot image managing apparatus as claimed in claim 8, further comprising area inputting means for inputting data indicating an area of a screen of said image data, wherein said writing means writes said one of said series of shots of said image data judged to be written in said second storing means when said judging means judges that each of said series of shots of said image data is to be written in accordance with said characteristic value at said area.

10. A road shot image managing apparatus as claimed in claim 8 or 9, wherein said image data includes colour data and said characteristic image detection means comprises:

colour comparing means for comparing colour data of each pixel of said one of said series of shots of said image data with colour reference data; counting means for counting said pixels in said one of said series of shots when said colour data of each pixel of said one of said series of shots of said image data exceed said colour reference data, said characteristic image detection means writing said one of said series of shots in said second storing means in accordance with a count of said counting means.

11. A road shot image managing apparatus according to any one of claims 7 to 10, further comprising:

first peak detecting and outputting means for detecting a peak of said characteristic values successively detected and outputting said position data from said reading means corresponding to said peak.

12. A road shot image managing apparatus as claimed in claim 11, wherein said writing means is for successively writing said one of said series of shots of said image data corresponding to said peak in said second storing means; and further comprising:

reading and outputting means for reading and outputting said image data stored in said second storing means in response to a request.

13. A road shot image managing apparatus according to claim 11 or 12, further comprising:

second peak detection means for detecting second peaks of said characteristic values of said image data of the other of said sets within a predetermined position interval from the position of said position data of said first peak and detecting position data corresponding to said second peaks; averaging means for averaging said position data of said first peak and said second peaks to output an average peak position.

**Patentansprüche**

1. Straßenaufnahme-Bildverwaltungsvorrichtung umfassend:

ein Speichermittel (42, 52, 62), um verschiedene Arten von Bilddaten zu speichern, wobei jede Art von Bilddaten eine Reihe von Aufnahmen entlang der Straße umfasst; ein Tabellenmittel (45, 55, 65), um Positionsdaten und Lagedaten für jede der Arten von Bilddaten mit einer Entsprechung zwischen diesen zu speichern; ein Eingabemittel (2), um Anweisungspositionsdaten und Anweisungslagedaten einzugeben; ein erstes Lesemittel (41, 51, 61), um die Lagedaten und Positionsdaten von jeder der verschiedenen Arten von Bilddaten zu lesen, wobei die Daten, die gelesen werden, den Anweisungspositionsdaten entsprechen; und ein zweites Lesemittel (41, 51, 61, 6), das auf das Eingabemittel und das erste Lesemittel anspricht, um eine der Reihen von Aufnahmen von einer der verschiedenen Arten von Bilddaten zu lesen, wobei das Lesen gemäß den Positionsdaten und den Lagedaten aus dem ersten Lesemittel und auch gemäß den Anweisungslagedaten erfolgt, wobei das zweite Lesemittel vorgesehen ist, um eine der Reihen von Aufnahmen auszugeben.

2. Straßenaufnahme-Bildverwaltungsvorrichtung nach Anspruch 1, wobei das zweite Lesemittel jegliche Lagedaten aus dem ersten Lesemittel mit den Anweisungslagedaten vergleicht und bestimmt, welche der verschiedenen Arten von Bilddaten entsprechende Lagedaten mit einem Wert aufweisen, der dem Wert der Anweisungslagedaten am nächsten liegt, wobei das zweite Lesemittel des Weiteren die Reihe von auszugebenden Aufnahmen gemäß den Positionsdaten aus dem ersten Lesemittel bestimmt.

3. Straßenaufnahme-Bildverwaltungsvorrichtung nach Anspruch 1 oder 2, wobei die Lagedaten Höhendaten umfassen.

4. Straßenaufnahme-Bildverwaltungsvorrichtung nach Anspruch 1, 2 oder 3, wobei die Lagedaten Richtungsdaten enthalten.

5. Straßenaufnahme-Bildverwaltungsvorrichtung nach Anspruch 1, 2, 3 oder 4, des Weiteren umfassend einen Darstellungsmonitor, der die eine der Reihen von Aufnahmen darstellt, die aus dem zweiten Lesemittel ausgegeben wird.

6. Straßenaufnahme-Bildverwaltungsvorrichtung nach Anspruch 1, 2, 3, 4 oder 5, wobei das Eingabemittel umfasst:

    ein Breitengrad- und Längengradeingabemittel, das auf eine erste Bedienung anspricht, um Breitengraddaten und Längengraddaten einzugeben und um die Breitengraddaten und Längengraddaten als die Anweisungspositionsdaten auszugeben;
    ein Positionsdatenerzeugungsmittel mit einem Kartendatenspeichermittel, um Kartendaten zu speichern, einem Kartendarstellungsmittel, um die Kartendaten darzustellen, und einem Anzeigemittel, das auf eine zweite Bedienung anspricht, um eine Position auf den dargestellten Kartendaten anzuzeigen, wobei das Positionsdatenerzeugungsmittel des Weiteren ein Positionsdatenberechnungsmittel umfasst, um die Anweisungspositionsdaten gemäß der Position und den Kartendaten zu berechnen;
    ein Positionsdatenausgabemittel, um die Breitengraddaten und Längengraddaten aus dem Breitengrad- und Längengradeingabemittel im Anschluss an eine erste Bedienung auszugeben, wobei die Breitengrad- und Längengraddaten als die Anweisungspositionsdaten ausgegeben werden, und um die Anweisungspositionsdaten aus dem Berechnungsmittel im Anschluss an die zweite Bedienung auszugeben; und
ein Höhendateneingabe- und -ausgabemittel, um die Anweisungshöhendaten einzugeben und auszugeben.

7. Straßenaufnahme-Bildverwaltungsvorrichtung umfassend:

    ein erstes Speichermittel, um Bilddaten zu speichern, die eine Reihe von Aufnahmen entlang einer Straße und Positionsdaten von jeder dieser Reihen von Aufnahmen umfassen, wobei jede Reihe von Aufnahmen der Bilddaten und alle Positionsdaten entsprechend gespeichert werden;
    ein Lesemittel, das auf einen Lesebefehl anspricht, um eine der Reihen von Aufnahmen und die Positionsdaten, die dieser entsprechen, aus dem ersten Speichermittel zu lesen;
    ein Darstellungsmittel, um die eine der Reihen von Aufnahmen aus dem Lesemittel darzustellen;
    ein Datenerzeugungsmittel, um Typdaten in Ansprechen auf eine Bedienung zu erzeugen;
    ein zweites Speichermittel, um die Bilddaten, Positionsdaten und Typdaten zu speichern; und
    ein Schreibmittel, um die eine der Reihen von Aufnahmen und die Positionsdaten aus dem Lesemittel in das zweite Speichermittel entsprechend zu schreiben und des Weiteren die eine der Reihen von Aufnahmen und die Positionsdaten aus dem Lesemittel in das zweite Speichermittel mit den Typdaten des Datenerzeugungsmittels im Falle der Bedienung entsprechend zu schreiben.

8. Straßenaufnahme-Bildverwaltungsvorrichtung nach Anspruch 7, des Weiteren umfassend:

    ein Ausdünnungsmittel, das auf das Lesemittel anspricht, um die Reihe von Aufnahmen der Bilddaten in einem vorbestimmten Intervall eines Werts der Positionsdaten sukzessive auszudünnen und die ausgedünnte Reihe von Aufnahmen der Bilddaten sukzessive in das zweite Speichermittel zu schreiben;
    ein Bildcharakteristikerfassungsmittel, um einen charakteristischen Wert von jeder der Reihen von Aufnahmen der Bilddaten aus dem Lesemittel sukzessiv zu erfassen; und
    ein Beurteilungsmittel, um zu beurteilen, ob jede der Reihen von Aufnahmen der Bilddaten gemäß dem charakteristischen Wert geschrieben wird;

wobei das Schreibmittel für ein weiteres Schreiben der einen der gemäß der Beurteilung zu schreibenden Reihen von Aufnahmen der Bilddaten in das zweite Speichermittel vorgesehen ist, wobei das zweite Speichermittel die ausgedünnte Reihe von Aufnahmen der Bilddaten und die eine der gemäß der Beurteilung zu schreibenden Reihen von Aufnahmen der Bilddaten speichert.

9.  Straßenaufnahme-Bildverwaltungsvorrichtung nach Anspruch 8, des Weiteren umfassend ein Flächeneingabemittel, um Daten einzugeben, die eine Fläche eines Bildschirms der Bilddaten anzeigen, wobei das Schreibmittel die eine der gemäß der Beurteilung zu schreibenden Reihen von Aufnahmen der Bilddaten in das zweite Speichermittel schreibt, wenn das Beurteilungsmittel beurteilt, dass jede der Reihen von Aufnahmen der Bilddaten gemäß dem charakteristischen Wert an der Fläche geschrieben werden soll.

10. Straßenaufnahme-Bildverwaltungsvorrichtung nach Anspruch 8 oder 9, wobei die Bilddaten Farbdaten umfassen und
    das Bildcharakteristikerfassungsmittel umfasst:

    ein Farbvergleichsmittel, um die Farbdaten von jedem Pixel der einen der Reihen von Aufnahmen der Bilddaten mit Farbreferenzdaten zu vergleichen;
    ein Zählmittel, um die Pixel in der einen der Reihen von Aufnahmen zu zählen, wenn die Farbdaten von jedem Pixel der einen der Reihen von Aufnahmen der Bilddaten die Farbreferenzdaten überschreiten, wobei das Bildcharakteristikerfassungsmittel die eine der Reihen von Aufnahmen in das zweite Speichermittel gemäß einem Zählwert des Zählmittels schreibt.

11. Straßenaufnahme-Bildverwaltungsvorrichtung nach einem der Ansprüche 7 bis 10, des Weiteren umfassend:

    ein erstes Höchstwerterfassungs- und -ausgabemittel, um einen Höchstwert der charakteristischen Werte, die sukzessive erfasst werden, zu erfassen, und um die Positionsdaten aus dem Lesemittel entsprechend dem Höchstwert auszugeben.

12. Straßenaufnahme-Bildverwaltungsvorrichtung nach Anspruch 11, wobei das Schreibmittel vorgesehen ist, um die eine der Reihen von Aufnahmen der Bilddaten entsprechend dem Höchstwert sukzessive in das zweite Speichermittel zu schreiben; und des Weiteren umfassend:

    ein Lese- und Ausgabemittel, um die Bilddaten, die in dem zweiten Speichermittel gespeichert sind, in Ansprechen auf eine Anfrage zu lesen und auszugeben.

13. Straßenaufnahme-Bildverwaltungsvorrichtung nach Anspruch 11 oder 12, des Weiteren umfassend:

    ein zweites Höchstwerterfassungsmittel, um zweite Höchstwerte der charakteristischen Werte der Bilddaten der anderen der Sätze in einem vorbestimmten Positionsintervall aus der Position der Positionsdaten des ersten Höchstwerts zu erfassen, und um Positionsdaten entsprechend den zweiten Höchstwerten zu erfassen;
    ein Mittelwertbildungsmittel, um einen Mittelwert der Positionsdaten des ersten Höchstwerts und der zweiten Höchstwerte zu bilden, um eine Höchstwertmittelwertposition auszugeben.

## Revendications

1.  Appareil de gestion d'image photographique routière comprenant :

    un moyen de mémorisation (42, 52, 62) pour mémoriser différents types de données d'image, chaque type de données d'image comprenant une série de photographies le long d'une route ;

    un moyen de table (45, 55, 65) pour mémoriser les données de position et les données d'attitude pour chacun dudit type de données d'image avec une correspondance entre celles-ci ;

    un moyen d'entrée (2) pour entrer des données de position d'instruction et des données d'attitude d'instruction ;

    un premier moyen de lecture (41, 51, 61) pour lire lesdites données d'attitude et lesdites données de position de chacun desdits différents types de données d'image, les données lues correspondant auxdites données de position d'instruction ; et

    un second moyen de lecture (41, 51, 6) sensible audit moyen d'entrée et audit premier moyen de lecture pour lire une de ladite série des photographies d'un desdits types différents des données d'image, ladite lecture étant en conformité avec lesdites données de position et lesdites données d'attitude provenant dudit moyen de lecture, et également en conformité avec lesdites données d'attitude d'instruction, ledit second moyen de lecture ayant pour but de sortir une photographie de ladite série des photographies.

2.  Appareil de gestion d'image photographique routière selon la revendication 1, dans lequel ledit second moyen de lecture compare chacune desdites données d'attitude provenant dudit premier moyen de lecture auxdites données d'attitude d'instruction et détermine lequel des différents types de données d'image présente des données d'attitude correspondantes ayant une valeur qui est la plus proche de la valeur desdites données d'attitude d'instruction, ledit second moyen de lecture déterminant, en outre, la série des photographies à sortir en conformité avec lesdites données de position provenant dudit premier moyen de lecture.

3.  Appareil de gestion d'image photographique routière selon la revendication 1 ou 2, dans lequel lesdites données d'attitude incluent des données d'altitude.

4.  Appareil de gestion d'image photographique routière selon la revendication 1, 2 ou 3 dans lequel lesdites données d'attitude contiennent des données de direction.

5.  Appareil de gestion d'image photographique routière selon la revendication 1, 2, 3 ou 4 comprenant, en outre, un écran d'affichage affichant une photographie de ladite série des photographies sorties dudit second moyen de lecture.

6.  Appareil de gestion d'image photographique routière selon la revendication 1, 2, 3, 4 ou 5, dans lequel ledit moyen d'entrée comprend :

    un moyen d'entrée de latitude et de longitude sensible à une première opération pour entrer les données de latitude et les données de longitude et pour sortir lesdites données de latitude et lesdites données de longitude comme lesdites données de position d'instruction ;

    un moyen de génération de données de position incluant un moyen de mémorisation de données cartographiques pour mémoriser des données cartographiques, un moyen d'affichage cartographique pour afficher lesdites données cartographiques et un moyen d'indication sensible à une seconde opération pour indiquer une position sur lesdites données cartographiques affichées, ledit moyen de génération de données de position incluant, en outre, un moyen de calcul de données de position pour calculer lesdites données de position d'instruction en conformité avec lesdites données de position et lesdites données cartographiques ;

un moyen de sortie de données de position pour sortir lesdites données de latitude et lesdites données de longitude depuis ledit moyen d'entrée de latitude et de longitude suivant ladite première opération, lesdites données de latitude et de longitude étant sorties comme données de position d'instruction, et pour sortir lesdites données de position d'instruction depuis ledit moyen de calcul suivant ladite seconde opération ; et

un moyen d'entrée et de sortie de données d'altitude pour entrer et sortir lesdites données d'altitude d'instruction.

7.  Appareil de gestion d'image photographique routière comprenant :

    un premier moyen de mémorisation pour mémoriser les données d'image comprenant une série de photographies le long d'une route et des données de position de chacune de ladite série des photographies, chaque série des photographies desdites données d'image et chacune desdites données de position étant mémorisées de manière correspondante ;

    un moyen de lecture sensible à un ordre de lecture pour lire une de ladite série des photographies et lesdites données de position correspondant à celles-ci à partir dudit premier moyen de mémorisation ;

    un moyen d'affichage pour afficher ladite une de ladite série des photographies provenant dudit moyen de lecture ;

    un moyen de génération de données pour générer des données de type en réponse à une opération ;

    un second de mémorisation pour mémoriser lesdites données d'image, lesdites données de position et les données de type ; et

    un moyen d'écriture pour écrire en correspondance ladite une de ladite série des photographies et desdites données de position provenant dudit moyen de lecture dans ledit second moyen de mémorisation et de plus, écrivant de manière correspondante, ladite une de ladite série des photographies et lesdites données de position provenant dudit moyen de lecture dans ledit second moyen de mémorisation avec lesdites données de type provenant du moyen de génération de données en la présence de ladite opération.

8. Appareil de gestion d'image photographique routière selon la revendication 7, comprenant en outre :

un moyen d'amincissement sensible audit moyen de lecture pour réduire successivement ladite série des photographies desdites données d'image à un intervalle prédéterminé d'une valeur desdites données de position et pour écrire successivement ladite série réduite des photographies desdites données d'image dans ledit second moyen de mémorisation ;

un moyen de détection d'image caractéristique pour détecter successivement une valeur caractéristique de chacune de ladite série des photographies desdites données d'image provenant dudit moyen de lecture ; et

un moyen de jugement pour juger si chacune de ladite série des photographies desdites données d'image doit être écrite en conformité avec ladite valeur caractéristique ;

dans lequel ledit moyen d'écriture est destiné de plus, à écrire, ladite une de ladite série des photographies desdites données d'image jugées devant être écrites dans ledit second moyen de mémorisation, dans lequel ledit second moyen de mémorisation mémorise ladite série réduite de photographies desdites données d'image et ladite une de ladite série des photographies desdites données d'image jugées devant être écrites.

9. Appareil de gestion d'image photographique routière selon la revendication 8, comprenant, en outre, un moyen d'entrée de zone pour entrer les données indiquant une zone d'un écran desdites données d'image, dans lequel ledit moyen d'écriture écrit ladite une de ladite série des photographies desdites données d'image jugées devant être écrites dans ledit second moyen de mémorisation lorsque ledit moyen de jugement juge que chacune de ladite série des photographies desdites données d'image doit être écrite en conformité avec ladite valeur caractéristique au niveau de ladite zone.

10. Appareil de gestion d'image photographique routière selon la revendication 8 ou 9, dans lequel lesdites données d'image incluent des données de couleur et

ledit moyen de détection d'image de caractéristique comprend :

un moyen de comparaison de couleur pour comparer les données de couleur de chaque pixel de ladite photographie de ladite série des photographies desdites données d'image avec des données de référence de couleur ;

un moyen de comptage pour compter lesdits pixels dans ladite une de ladite série des photographies lorsque lesdites données de couleur de chaque pixel de ladite une de ladite série des photographies desdites données d'image dépassent lesdites données de référence de couleur, ledit moyen de détection d'image de caractéristique écrivant ladite une de ladite série des photographies dans ledit second moyen de mémorisation en conformité avec un compte dudit moyen de comptage.

11. Appareil de gestion d'image photographique routière selon l'une quelconque des revendications 7 à 10, comprenant en outre :

un premier moyen de détection et de sortie de crête pour détecter une crête desdites valeurs caractéristiques détectées successivement et pour sortir lesdites données de position depuis ledit moyen de lecture en correspondance avec ladite crête.

12. Appareil de gestion d'image photographique routière selon la revendication 11, dans lequel ledit moyen de lecture est destiné à écrire successivement ladite une de ladite série des photographies desdites données d'image correspondant à ladite crête dans ledit second moyen de mémorisation ; et comprenant en outre :

un moyen de lecture et de sortie pour lire et sortir lesdites données d'image mémorisées dans ledit second moyen de mémorisation en réponse à une demande.

13. Appareil de gestion d'image photographique routière selon la revendication 11 ou 12, comprenant en outre :

un second moyen de détection de crête pour détecter les secondes crêtes desdites valeurs caractéristiques desdites données d'image de l'autre desdits ensembles à l'intérieur d'un intervalle de position prédéterminé depuis la position desdites données de position de ladite première crête et pour détecter les données de position correspondant auxdites secondes crêtes ;

un moyen de mise en moyenne pour mettre en moyenne lesdites données de position de ladite première crête et desdites secondes crêtes pour sortir une position crête mise en moyenne.

# FIG. 1

# FIG. 2

POSITION DATA INPUT PORTION 2

| | | |
|---|---|---|
| LAT/LONG DATA INPUT PORTION 21 | MAP DISPLAY PORTION 22 | POINTING PORTION 27 |

ALT DATA INPUT PORTION 23

DIR DATA INPUT PORTION 24

LAT/LONG DATA CALC PORTION 25

TYPE SEL 26

ANGLE DATA INPUT PORTION 28

29

2a

8

2b

EP 0 977 014 B1

# FIG. 3

MONITOR DISPLAY 7

LAT/LONG DATA DISPLAY AREA 21a

ALT DATA DISPLAY AREA 23a

30

10

22a

300

24a DIR DISPLAY AREA

28a ANGLE DATA DISPLAY AREA

26a TYPE SEL DISPLAY AREA

31  32  33

MOUSE 27

2

34

KEYBOARD

EP 0 977 014 B1

# FIG. 4

N

COMPASS DIRECTION CD

TRAVELING DIR

X AXIS

VA

Y AXIS

ZA ANGLE

Z AXIS

GPS SIG

431

434 RECORDER

440

433 VIDEO CAMERA

441 ALTITUDE

SHOOTING AREA

EP 0 977 014 B1

# FIG. 5

AERIAL IMAGE DATA MANAGING PORTION

IMAGE DATA STORING PORTION

3

42

INST POS DATA 2a

IMAGE DATA 3a

41

FRAME NO. DATA

READING CKT

FRAME NO.

(IMAGE DATA)

3b ATT DATA

140 REC MED

43

44 FRAME

140 REC MED

TABLE 45

46 — FRAME NO.

47 — LAT, LONG      DIR — 49

48 — ALT      ANGLE — 50

# FIG. 6

ROAD IMAGE DATA MANAGING PORTION

IMAGE DATA STORING PORTION
52

INST POS DATA 2a

READING CKT 51

FRAME NO. DATA

4b ATT DATA

150 REC MED

FRAME NO. 53

IMAGE DATA 54

FRAME

IMAGE DATA 4a

150 REC MED

TABLE 55

56 — FRAME NO.

57 — LAT, LONG    DIR — 59

58 — ALT DATA    90 — 60

ANGLE DATA

EP 0 977 014 B1

# FIG. 7

PATROL IMAGE DATA
MANAGING PORTION

IMAGE DATA
STORING PORTION

62

INST POS
DATA
2a

READING
CKT

61

FRAME
NO.
DATA

FRAME
NO.

IMAGE
DATA

IMAGE DATA
5a

160

63      64
FRAME

5b
ATT DATA

REC MED

160 REC MED

TABLE
65

66      FRAME NO.

67      LAT, LONG      DIR

ALT
DATA

0      ANGLE DATA

69

68      70

EP 0 977 014 B1

# FIG. 8

SIGN BOARDS
114

VIDEO CAMERA
115

CAR
NAVIGATION
UNIT 116

118 ROAD

VEHICLE
117

# FIG. 9

MONITOR
DISPLAY
161

POS
DISPLAY
162

TYPE
DISPLAY
163

POS

TYPE

164 DECISION
BUTTON

165
IMAGE FORWARDING
UNIT

156
DISPLAY/INPUT
PORTION

EP 0 977 014 B1

## FIG. 10

RECORDING MEDIUM (IMAGE SOURCE) ~151

POS DATA (IMAGE DATA)  — 153

RECORDING UNIT 152

154 FRAME

165
IMAGE FORWARDING UNIT

155
READING & STORING PORTION

161
MONITOR DISPLAY

164 □

167
TYPE DATA GEN PORTION

162 POS DISPLAY

163 TYPE DISPLAY

RECORDING MEDIUM (OUTPUT) ~157

158 — POS DATA (IMAGE DATA) — 166 FRAME

159 — TYPE DATA

160

EP 0 977 014 B1

# FIG. 11

121 READING UNIT

91 ORIGINAL RECORDING MEDIUM

104 — POS | (IMAGE DATA)

106 SHOT IMAGE DATA

105 MOVING PICTURE FRAME

92

THINNING JUDGING PORTION

94 POS DATA STORING PORTION

99 IMAGE DATA READING PORTION

93 FILTER

95 COM-PARING PORTION

100 RESULT STORING PORTION

96 REF DATA INC PORTION

97 REF DATA STORING PORTION

101 JUDGING PORTION

98 THINNING CONT PORTION

102 IMAGE WRITING PORTION

114 RECORDER

107 — POS | (IMAGE DATA)

103 RECORDING MEDIUM

109 DATA UNIT

108 RESULTANT MOVING PICTURE FRAME

## FIG. 12.

FROM IMAGE DATA
READING PORTION
99

93

FILTER

AREA
DATA

110

PARTIALLY
READING
PORTION

111

IMAGE DATA
STORING
PORTION

COLOR
DATA

112

COND DATA
STORING
PORTION

113

COMPARING
& COUNTING
PORTION

100
TO RESULT
STORING PORTION

EP 0 977 014 B1

EP 0 977 014 B1

# FIG. 13

RECORDING
MEDIUM
121

| POS DATA | MOVING PICTURE FRAME OF IMAGE DATA |

122    123

# FIG. 14

123

# FIG. 15

123

# FIG. 16A    # FIG. 16B    # FIG. 16C    # FIG. 16D

143  135  131

144  136  132

145  137  133

146  138  134

114

114

114

114

114

8m

9m

10m

11m

139

140

141

142

EP 0 977 014 B1

# FIG. 17

# FIG. 18

# FIG. 19

RECORDING MEDIUM A 201
RECORDING MEDIUM B 202
RECORDING MEDIUM C 203

| POS |  |
|-----|--|

174

| POS | FRAME |
|-----|-------|

174  175

| POS | FRAME |
|-----|-------|

174  175

171 READING CKT

173 RECORDING UNIT
175 MOVING PICTURE FRAME

176 FILTER

TBL STORING PORTION 177

FLT TBL 183a
FLT TBL 183b
FLT TBL 183c

178  179

| | A | |
|---|---|---|
| POS | COUNT | |
| | | |
| | | |

| | B | |
|---|---|---|
| POS | COUNT | |
| | | |
| | | |

| | C | |
|---|---|---|
| POS | COUNT | |
| | | |
| | | |

180 PEAK DET

PEAK POS TBL 181a

PEAK POS TBL STORING PORTION 182

181b   181c

| A |
|---|
| P POS$_{A1}$ |
| P POS$_{A2}$ |
| P POS$_{An}$ |

| B |
|---|
| P POS$_{B1}$ |
| P POS$_{B2}$ |
| P POS$_{Bn}$ |

| C |
|---|
| P POS$_{C1}$ |
| P POS$_{C2}$ |
| P POS$_{Cn}$ |

187 TARGET POS DETERMINING PORTION

TARGET POS DATA OUTPUT PORTION 186

| TARGET POS | 185 |
|---|---|
| T POS$_{AV1}$ | |
| T POS$_{AV2}$ | |

# FIG. 20

```
                    ( START )
                        │
  ┌─────────────────────┤
  │                      ▼
  │         ┌──────────────────────────┐  S1
  │         │ READ POS OF NEXT PEAK i  │
  │         │ (P POSAi, i=1~n)         │
  │         └──────────────────────────┘
  │                      │
  │                      ▼
  │         ┌──────────────────────────┐  S2
  │         │ DETERMINE SEARCHING      │
  │         │ RANGE                    │
  │         │     PL=P POSAi−W         │
  │         │     PH=P POSAi+W         │
  │         └──────────────────────────┘
  │                      │
  │                      ▼
  │         ┌──────────────────────────┐  S3
  │         │ DET  P POSBi, P POSCi, ··· │
  │         │ WITHIN SEARCHING RANGE   │
  │         │ PL~PH                    │
  │         └──────────────────────────┘
  │                      │
  │                      ▼
  │         ┌──────────────────────────┐  S4
  │         │ AVERAGE PEAK POS OF      │
  │         │ P POSAi, P POSBi, P POSCi··· │
  │         └──────────────────────────┘
  │   S8                 │
  │    ┌──────────┐      ▼
  │    │  i=i+1   │    ┌──────────────────────────┐  S5
  │    └──────────┘    │ STORE AVERAGED POS       │
  │         ▲          │ P POSAvi                 │
  │         │          └──────────────────────────┘
  │         │                     │
  │         │                     ▼
  │         │               ╱───── S6 ─────╲
  └─────────┴──────────────◄   FINISHED ?   ►
                            ╲───────────────╱
                                    │
                                    ▼
                        ┌──────────────────────────┐  S7
                        │         OUTPUT           │
                        └──────────────────────────┘
                                    │
                                    ▼
                                ( END )
```

## FIG. 21A

201
RECORDING MEDIUM A

## FIG. 21B

202
RECORDING MEDIUM B

## FIG. 21C

203
RECORDING MEDIUM C

## FIG. 22A

204

207

## FIG. 22B

205

208

## FIG. 22C

206

W W

209

210   211   212